# EUROPEAN PATENT APPLICATION

(11) **EP 4 832 573 A1**
(43) Date of publication of application: **28.10.2026**
(21) Application number: 24906278.7
(22) Date of filing: 16.12.2024
(51) Int. Cl.: H04W 36/00

(54) **VALIDITY VERIFICATION METHOD AND APPARATUS, AND TERMINAL, NETWORK-SIDE DEVICE, AND MEDIUM**

(30) Priority: 20.12.2023 CN 202311764652; 08.02.2024 CN 202410177643
(71) Applicant: Vivo Mobile Communication Co., Ltd., Dongguan, Guangdong 523863 (CN)
(72) Inventor: HUANG, Zhihan, Dongguan, Guangdong 523863 (CN); YANG, Xiaodong, Dongguan, Guangdong 523863 (CN); BAO, Wei, Dongguan, Guangdong 523863 (CN)
(74) Representative: dompatent
(86) International application number: PCT/CN2024/139463
(87) International publication number: WO 2025/130797

(57) **Abstract**

This application discloses a validity verification method and apparatus, a terminal, a network-side device, and a medium, and is in the technical field of communications. The validity verification method of an embodiment of this application includes: receiving, by a terminal, first configuration information associated with a validity verification parameter, where the first configuration information is carried in a first message, and the first message includes at least one of: a handover command; an SIB1; an RRC release message; a terminal information request message; an RRC connection setup message; or an RRC resume message.

## Description

### CROSS-REFERENCE TO RELATED APPLICATIONS

This application claims priority to Chinese Patent Application No. 202311764652.8, filed in China on December 20, 2023, and to Chinese Patent Application No. 202410177643.7, filed in China on February 8, 2024, both of which are incorporated herein by reference.

### TECHNICAL FIELD

This application is in the technical field of communications, and specifically relates to a validity verification method and apparatus, a terminal, a network-side device, and a medium.

### BACKGROUND

Currently, a terminal in an idle or inactive (idle/inactive) state can reselect to a new cell during the process of measuring a carrier configurable for dual connectivity (Dual Connectivity, DC) or carrier aggregation (Carrier Aggregation, CA), and then report a measurement result based on a validity verification parameter in a system information block (System Information Block, SIB) 11 broadcast by a network-side device.

However, the network-side device periodically broadcasts the SIB11. As a result, if the terminal, when initiating radio resource control (Radio Resource Control, RRC) connection setup or resumption in a new cell, does not receive the SIB11 broadcast by the network-side device, the terminal may be unable to determine validity of the measurement result based on the validity verification parameter, resulting in reporting of an invalid measurement result, which in turn leads to inaccurate determining regarding the validity of the measurement result.

### SUMMARY

Embodiments of this application provide a validity verification method and apparatus, a terminal, a network-side device, and a medium, which can ensure that the terminal receives a validity verification parameter in a timely manner, thereby ensuring the accuracy of determining regarding validity of a measurement result.

According to a first aspect, a validity verification method is provided. The method is performed by a terminal and includes: receiving, by the terminal, first configuration information associated with a validity verification parameter, where the first configuration information is carried in a first message, and the first message includes at least one of: a handover command; an SIB1; an RRC release message; a terminal information request message; an RRC connection setup message; or an RRC resume message.

According to a second aspect, a validity verification method is provided. The method is performed by a network-side device and includes: sending, by the network-side device, first configuration information associated with a validity verification parameter to a terminal, where the first configuration information is carried in a first message, and the first message includes at least one of: a handover command; an SIB1; an RRC release message; a terminal information request message; an RRC connection setup message; or an RRC resume message.

According to a third aspect, a validity verification apparatus is provided. The apparatus includes a receiving module, where the receiving module is configured to receive first configuration information associated with a validity verification parameter, where the first configuration information is carried in a first message, and the first message includes at least one of: a handover command; an SIB1; an RRC release message; a terminal information request message; an RRC connection setup message; or an RRC resume message.

According to a fourth aspect, a validity verification apparatus is provided. The apparatus includes a sending module, where the sending module is configured to send first configuration information associated with a validity verification parameter to a terminal, where the first configuration information is carried in a first message, and the first message includes at least one of: a handover command; an SIB1; an RRC release message; a terminal information request message; an RRC connection setup message; or an RRC resume message.

According to a fifth aspect, a measurement reporting processing method is provided. The method includes: reporting, by a terminal, target information used to assist a network-side device in configuring DC or CA for the terminal, where the target information includes at least one of a measurement result of enhanced measurement, a measurement result of early measurement, or fourth information.

According to a sixth aspect, a measurement reporting processing method is provided. The method includes: receiving, by a network-side device, target information used to assist the network-side device in configuring DC or CA for a terminal, where the target information includes at least one of a measurement result of enhanced measurement, a measurement result of early measurement, or fourth information.

According to a seventh aspect, a measurement reporting apparatus is provided. The apparatus includes a receiving module.

The receiving module is configured to receive target information used to assist a network-side device in configuring DC or CA for a terminal, where the target information includes at least one of a measurement result of enhanced measurement, a measurement result of early measurement, or fourth information.

According to an eighth aspect, a measurement reporting apparatus is provided. The apparatus includes a sending module.

The sending module is configured to send target information used to assist a network-side device in configuring DC or CA for the terminal, where the target information includes at least one of a measurement result of enhanced measurement, a measurement result of early measurement, or fourth information.

According to a ninth aspect, a terminal is provided. The terminal includes a processor and a memory. The memory stores a program or instructions executable on the processor, and the program or the instructions, when executed by the processor, implement the steps of the method according to the first or fifth aspect.

According to a tenth aspect, a terminal is provided. The terminal includes a processor and a communication interface. The communication interface is configured to receive first configuration information or report target information.

According to an eleventh aspect, a network-side device is provided. The network-side device includes a processor and a memory. The memory stores a program or instructions executable on the processor, and the program or the instructions, when executed by the processor, implement the steps of the method according to the second or sixth aspect.

According to a twelfth aspect, a network-side device is provided. The network-side device includes a processor and a communication interface. The communication interface is configured to send first configuration information to a terminal or receive target information.

According to a thirteenth aspect, a readable storage medium is provided. The readable storage medium has a program or instructions stored thereon, and the program or the instructions, when executed by a processor, implement the steps of the method according to the first or fifth aspect or the steps of the method according to the second or sixth aspect.

According to a fourteenth aspect, a wireless communication system is provided. The system includes a terminal and a network-side device. The terminal may be configured to perform the steps of the method according to the first or fifth aspect, and the network-side device may be configured to perform the steps of the method according to the second or sixth aspect.

According to a fifteenth aspect, a chip is provided. The chip includes a processor and a communication interface. The communication interface is coupled to the processor. The processor is configured to execute a program or instructions to implement the method according to the first or fifth aspect or the method according to the second or sixth aspect.

According to a sixteenth aspect, a computer program/program product is provided. The computer program/program product is stored in a storage medium, and the program/program product is executed by at least one processor to implement the method according to the first or fifth aspect or the method according to the second or sixth aspect.

In embodiments of this application, the terminal receives first configuration information associated with a validity verification parameter. The first configuration information is carried in a first message including at least one of: a handover command; an SIB1; an RRC release message; a terminal information request message; an RRC connection setup message; or an RRC resume message. With this solution, the validity verification parameter may be carried via the first configuration information in the handover command, the SIB1, the RRC release message, the terminal information request message, the RRC connection setup message, or the RRC resume message. Therefore, since the reception time of the first message is before the terminal sends a measurement result to the network-side device, timely receipt of the validity verification parameter can be ensured compared with receiving the validity verification parameter via the SIB11, thereby achieving the objective of ensuring the accuracy of validity verification of the measurement result.

### BRIEF DESCRIPTION OF DRAWINGS

FIG. 1 is a diagram of a possible structure of a communication system according to an embodiment of this application;
FIG. 2 is a schematic flowchart of an idle state measurement mechanism according to an embodiment of this application;
FIG. 3 is a schematic flowchart of an inactive state measurement mechanism according to an embodiment of this application;
FIG. 4 is a first schematic flowchart of a validity verification method according to an embodiment of this application;
FIG. 5 is a second schematic flowchart of a validity verification method according to an embodiment of this application;
FIG. 6 is a third schematic flowchart of a validity verification method according to an embodiment of this application;
FIG. 7 is a fourth schematic flowchart of a validity verification method according to an embodiment of this application;
FIG. 8 is a first diagram of a structure of a validity verification apparatus according to an embodiment of this application;
FIG. 9 is a second diagram of a structure of a validity verification apparatus according to an embodiment of this application;
FIG. 10 is a diagram of a hardware structure of a communication device according to an embodiment of this application;
FIG. 11 is a diagram of a hardware structure of a terminal according to an embodiment of this application; and
FIG. 12 is a diagram of a hardware structure of a network-side device according to an embodiment of this application.

### DESCRIPTION OF EMBODIMENTS

Technical solutions in embodiments of this application are clearly described below with reference to the accompanying drawings in embodiments of this application. It is clear that, the embodiments described are merely some rather than all of embodiments of this application. Based on embodiments of this application, all other embodiments obtained by a person of ordinary skill in the art falls within the scope of protection of this application.

The terms "first", "second", and the like in this application are intended to distinguish between similar objects, and not necessarily to indicate a specific order or sequence. It should be understood that terms used in such a way are interchangeable as appropriate, so that embodiments of this application can be implemented in an order other than that illustrated or described herein. Moreover, the terms "first" and "second" typically distinguish between objects of one category without limiting the number of objects. For example, a first object may be one or more objects. In addition, "or" in this application represents at least one of connected objects. For example, "A or B" includes three solutions, that is, a solution 1: including A and not including B; a solution 2: including B and not including A; and a solution 3: including both A and B. The character "/" generally represents an "or" relationship between associated objects.

The term "indication" in this application may be either a direct indication (or an explicit indication) or an indirect indication (or an implicit indication). The direct indication can be understood as that a sender explicitly notifies, in a sent indication, a receiver of specific information, an operation that needs to be performed, a requested result, or other content. The indirect indication can be understood as that the receiver determines corresponding information based on the indication sent by the sender, or performs determining based on the indication sent by the sender, and determines, based on a determining result, the operation that needs to be performed, the requested result, or the like.

It should be noted that a technology described in embodiments of this application is not limited to a long term evolution (Long Term Evolution, LTE)/LTE-advanced (LTE-Advanced, LTE-A) system, and may be further applied to another wireless communication system, such as a code division multiple access (Code Division Multiple Access, CDMA) system, a time division multiple access (Time Division Multiple Access, TDMA) system, a frequency division multiple access (Frequency Division Multiple Access, FDMA) system, an orthogonal frequency division multiple access (Orthogonal Frequency Division Multiple Access, OFDMA) system, a single-carrier frequency-division multiple access (Single-carrier Frequency-Division Multiple Access, SC-FDMA) system, or another system. The terms "system" and "network" are often used interchangeably in embodiments of this application. The technology described may be used for the systems and radio technologies described above, as well as other systems and radio technologies. A new radio (New Radio, NR) system is described below for illustrative purposes, and NR terms are used in most of the following descriptions. However, these technologies may also be used in a system other than an NR system, for example, in a 6th generation (6^{th} Generation, 6G) communication system.

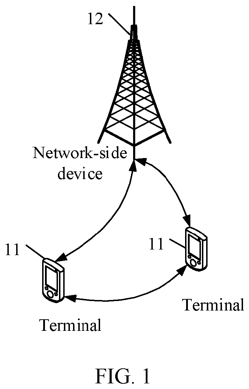

FIG. 1 is a block diagram of a wireless communication system to which an embodiment of this application is applicable. The wireless communication system includes a terminal 11 and a network-side device 12. The terminal 11 may be a terminal-side device such as a mobile phone, a tablet personal computer (Tablet Personal Computer), a laptop computer (Laptop Computer), a notebook computer, a personal digital assistant (Personal Digital Assistant, PDA), a palmtop computer, a netbook, an ultra-mobile personal computer (Ultra-mobile Personal Computer, UMPC), a mobile internet device (Mobile Internet Device, MID), an augmented reality (Augmented Reality, AR) device, a virtual reality (Virtual Reality, VR) device, a robot, a wearable device (Wearable Device), a flight vehicle (flight vehicle), vehicle user equipment (Vehicle User Equipment, VUE), ship-mounted equipment, pedestrian user equipment (Pedestrian User Equipment, PUE), a smart home (a home device with a wireless communication function, for example, a refrigerator, a television, a laundry machine, or furniture), a game console, a personal computer (Personal Computer, PC), an automated teller machine, or a self-service machine. The wearable device includes a smartwatch, a smart band, smart headphones, smart glasses, smart jewelry (such as a smart bangle, a smart bracelet, a smart ring, a smart necklace, a smart ankle bangle, or a smart ankle bracelet), a smart wriststrap, a smart dress, or the like. The vehicle user equipment may also be referred to as a vehicle-mounted terminal, a vehicle-mounted controller, a vehicle-mounted module, a vehicle-mounted component, a vehicle-mounted chip, a vehicle-mounted unit, or the like. It should be noted that a specific type of the terminal 11 is not limited in embodiments of this application. The network-side device 12 may include an access network device or a core network device. The access network device may also be referred to as a radio access network (Radio Access Network, RAN) device, a radio access network function, or a radio access network unit. The access network device may include a base station, a wireless local area network (Wireless Local Area Network, WLAN) access point (Access Point, AP), a wireless fidelity (Wireless Fidelity, WiFi) node, or the like. The base station may be referred to as a NodeB (NodeB, NB), an evolved NodeB (Evolved NodeB, eNB), a next generation NodeB (the next generation NodeB, gNB), a new radio NodeB (New Radio NodeB, NR NodeB), an access point, a relay base station (Relay Base Station, RBS), a serving base station (Serving Base Station, SBS), a base transceiver station (Base Transceiver Station, BTS), a radio base station, a radio transceiver, a basic service set (Basic Service Set, BSS), an extended service set (Extended Service Set, ESS), a home NodeB (home NodeB, HNB), a home evolved NodeB (home evolved NodeB), a transmission reception point (Transmission Reception Point, TRP), or another proper term in the field. The base station is not limited to a specific technical term, provided that the same technical effects are achieved. It should be noted that in embodiments of this application, only a base station in an NR system is used as an example for description, and a specific type of the base station is not limited.

The terms and nomenclature in embodiments of this application are explained below.
1. DC is a technology that can provide resources of two network nodes or access network elements for a terminal. One of the two network nodes may be referred to as a master node (Master node, MN), and the other may be referred to as a secondary node (Secondary node, SN).
2. CA is a technology that increases bandwidth by combining a plurality of independent carrier channels, thereby increasing a data rate and a capacity. When the network node uses the carrier aggregation technology, a series of serving cells, also referred to as a cell group (cell group), controlled by the network node may be configured for the terminal. A cell group controlled by the master node may be a master cell group (Master Cell Group, MCG), and a cell group controlled by the secondary node may be a secondary cell group (Secondary Cell Group, SCG).

When the network node uses the carrier aggregation technology, each cell group may contain one special cell (Special Cell, SpCell) and a series of secondary cells (Secondary Cell, Scell). A special cell in the MCG may be referred to as a primary cell (Primary Cell, PCell), and a special cell in the SCG may be referred to as a primary secondary cell (Primary Secondary Cell, PSCell). In actual applications, a SpCell in a cell group may use a primary carrier, other secondary cells may use secondary carriers, and resource scheduling within a cell group may be performed by the SpCell.

3. Idle (idle) or inactive (inactive) state measurement: A network-side device may instruct a terminal to perform measurement on a carrier configurable for DC or CA while the terminal is in a non-connected state, for example, in an idle or inactive state. During connection setup or resume, or after entering a connected state, the terminal may indicate that it has an available early measurement result and requests to report the early measurement result to the network-side device, thereby reporting the measurement result to the network-side device.

The network-side device may perform early measurement configuration for the terminal through RRC specific signaling (Connection Release) or in a system broadcast message, such as a long term evolution (Long Term Evolution, LTE) SIB5/24 or an NR SIB4/11, for example, by configuring a list of carriers or cells to be measured and a measurement duration. By means of early measurement, the network-side device can configure, based on the measurement result reported by the terminal, the DC or CA carrier for the terminal immediately after the terminal enters the connected state, effectively shortening the establishment delay of DC and CA.

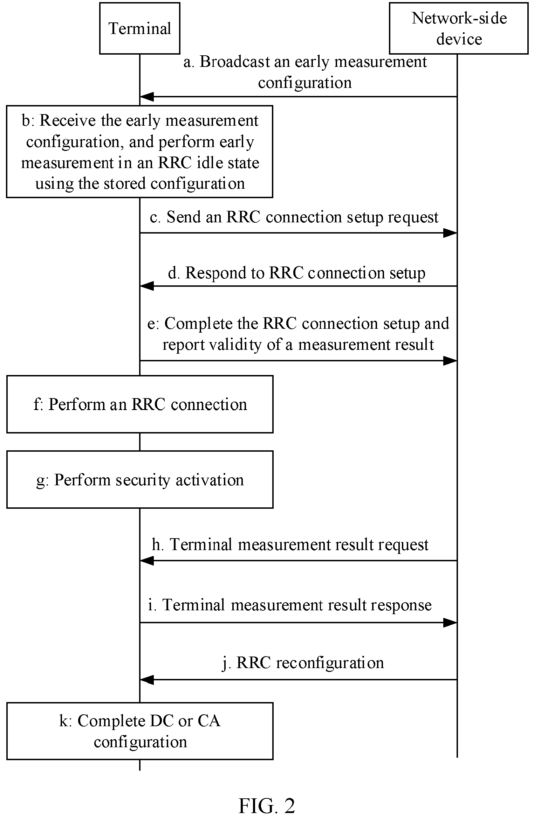

For example, as shown in FIG. 2, the terminal may perform idle state measurement through the following steps a to k.

Step a: The network-side device broadcasts an early measurement configuration.

Step b: The terminal receives the early measurement configuration, and performs early measurement in an RRC idle state using the stored configuration.

Step c: The terminal sends an RRC connection setup request to the network-side device.

Step d: The network-side device responds to RRC connection setup.

Step e: The terminal completes the RRC connection setup and reports validity of a measurement result.

Step f: The terminal performs an RRC connection.

Step g: The terminal performs security activation.

Step h: The network-side device sends a terminal measurement result request to the terminal.

Step i: The terminal sends a terminal measurement result response to the network-side device.

Step j: The network-side device performs RRC reconfiguration.

Step k: The terminal completes DC or CA configuration.

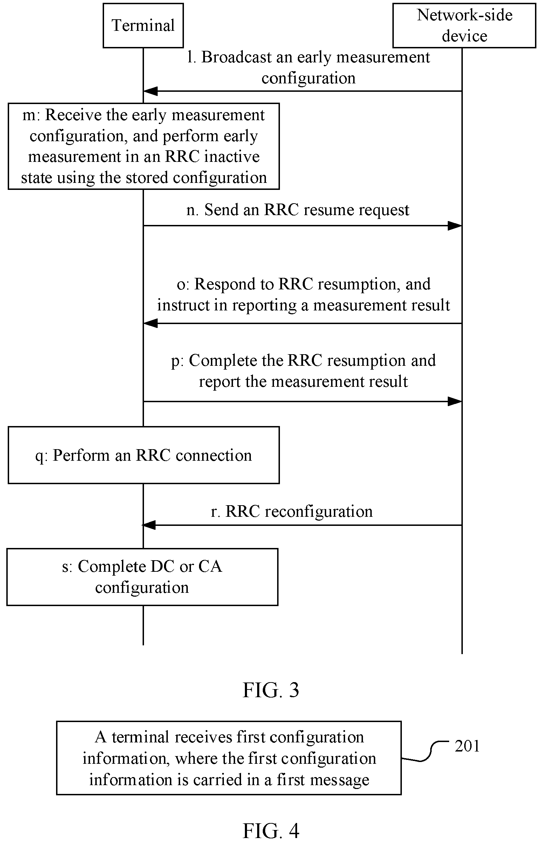

For example, as shown in FIG. 3, the terminal may perform inactive state measurement through the following steps l to s.

Step l: The network-side device broadcasts an early measurement configuration.

Step m: The terminal receives the early measurement configuration, and performs early measurement in an RRC inactive state using the stored configuration.

Step n: The terminal sends an RRC resume request to the network-side device.

Step o: The network-side device responds to RRC resumption, and instructs in reporting a measurement result.

Step p: The terminal completes the RRC resumption and reports the measurement result.

Step q: The terminal performs an RRC connection.

Step r: The network-side device performs RRC reconfiguration.

Step s: The terminal completes DC or CA configuration.

4. Validity verification: For a terminal that supports enhanced idle or inactive state measurement of the 3rd Generation Partnership Project (3rd Generation Partnership Project Rel-18, 3GPP R18), it may be considered that a measurement result is valid if the following conditions a and b are met:
a. A measurement result is considered valid if it meets the accuracy requirements and is obtained during the idle or inactive state within X seconds prior to the sending of a message (message) 1. The value of X is configured by the network-side device. If the network-side device does not configure the X value, the terminal is not required to perform validity verification.

For example, the value of X may be 5s, 10s, 20s, 50s, 100s, or the like.

b. The reported measurement result meets the measurement accuracy of a measurement instance.

With reference to the accompanying drawings, a validity verification method according to an embodiment of this application is described below in detail through some embodiments and their application scenarios.

The validity verification method according to this embodiment of this application can be applied to a scenario in which a terminal initiates RRC connection setup or resumption in a cell, especially a scenario in which the terminal reselects to another target cell during the process of idle or inactive state measurement, and initiates RRC connection setup or resumption without having received a configuration of a validity verification timer (timer) X in the target cell.

Currently, a terminal in an idle or inactive state can reselect to a new cell during the process of measuring a carrier configurable for DC or CA, and then perform DC or CA establishment based on an SIB11 broadcast by a network-side device.

However, the network-side device periodically broadcasts the SIB11. As a result, if the terminal, when initiating RRC connection setup in a new cell, does not receive the SIB11 broadcast by the network-side device, the terminal may be unable to determine validity of the measurement result, resulting in reporting of an invalid measurement result, which in turn prevents the network-side device from accurately configuring a secondary carrier or a primary secondary carrier for the terminal.

In an embodiment of this application, the validity verification parameter may be carried via the first configuration information in the handover command, the SIB1, the RRC release message, the terminal information request message, the RRC connection setup message, or the RRC resume message. Therefore, since the reception time of the first message is before the terminal sends a measurement result to the network-side device, timely receipt of the validity verification parameter can be ensured compared with receiving the validity verification parameter via the SIB11, thereby achieving the objective of ensuring the accuracy of validity verification of the measurement result.

With reference to the accompanying drawings, a validity verification method and apparatus, a terminal, a network-side device, and a medium according to embodiments of this application are described below in detail through some embodiments and their application scenarios.

FIG. 4 is a schematic flowchart of a validity verification method according to an embodiment of this application. As shown in FIG. 4, the validity verification method may include the following step 201.

Step 201: A terminal receives first configuration information, where the first configuration information is carried in a first message.

The first configuration information may be associated with a validity verification parameter. It is to be understood that the validity verification parameter is a parameter capable of verifying validity of a measurement result. In some examples, the validity verification parameter may also be referred to as a measurement validity duration (measurementValidityDuration).

In some embodiments of this application, after receiving the first message carrying configuration information of the validity verification parameter, the terminal performs validity verification on the measurement result based on the validity verification parameter to obtain a verification result. The verification result (for example, whether the measurement result is valid) may be sent to a network-side device together with the measurement result (regardless of the order in which the two are transmitted), or only a measurement result that has been verified as valid may be sent.

In this embodiment of this application, the reception time of the first message is before the terminal sends measurement results and/or a valid measurement result of the measurement results to the network-side device, and the first message includes but is not limited to at least one of the following messages: a handover command (handover command); an SIB1; an RRC release message (RRC Release); a terminal information request (Users Equipment Information Request) message; an RRC connection setup (RRC Setup) message; and an RRC resume (RRC Resume) message.

It is to be understood that, during cell handover, if the terminal receives the handover command before reporting the measurement results, a validity verification parameter for a target cell carried in the handover command allows the terminal to perform timely validity verification on the measurement results after entering the target cell.

In some embodiments of this application, during cell selection or reselection, the terminal needs to first receive the SIB1 of the target cell before reselection to the target cell. Therefore, the validity verification parameter is carried in the SIB1, allowing the terminal to perform timely validity verification on the measurement results after entering the target cell.

In some embodiments of this application, before performing cell selection or reselection, the terminal needs to first release a connection to a source cell through the RRC release message, and then reselect to another cell. Therefore, the validity verification parameter for the target cell is carried in the RRC release message, allowing the terminal to perform timely validity verification on the measurement results after entering the target cell.

In some embodiments of this application, after performing cell selection or reselection, the terminal in idle state first establishes an RRC connection to the network-side device, and then reports the measurement results. Therefore, the validity verification parameter is carried in the RRC connection setup message, allowing the terminal to perform timely validity verification on the measurement results.

In some embodiments of this application, after performing cell selection or reselection, the terminal in inactive state first resumes an RRC connection to the network-side device, and then reports the measurement results. Therefore, the validity verification parameter is carried in the RRC connection resume message, allowing the terminal to perform timely validity verification on the measurement results.

It should be noted that, the above-described situation is not limited to the terminal performing validity verification on the measurement results based on the validity verification parameter for the target cell after the terminal switches or reselects to the target cell. The validity verification parameter carried in the messages is also applicable to the terminal performing validity verification on the measurement results based on a validity verification parameter for the current camped cell before switching or reselecting to the target cell.

It should be noted that the cell selection/reselection herein mainly refers to cell selection/reselection within the same radio access technology (intra-RAT cell selection or reselection), and the target cell selected/reselected is a cell in a validity cell list (validityCellList).

It should be noted that these several examples of the first message do not constitute a limitation on this application. Any message that can be received before the sending of the measurement result and/or the validity verification result may be used to carry the validity verification parameter, for example, other system messages with this function than the SIB1.

It should be noted that the measurement result may be a measurement result of idle or inactive (idle/inactive) state measurement, or a measurement result of cell selection or reselection.

In some embodiments of this application, the validity verification parameter may be a parameter used when the terminal performs validity verification on the measurement result. In other words, the terminal may perform validity verification on at least one measurement result based on the validity verification parameter.

In some embodiments of this application, the first configuration information may be the configuration information of the validity verification parameter.

In some embodiments of this application, the terminal may configure the validity verification parameter through the first configuration information, so that the terminal can perform validity verification on the at least one measurement result based on the validity verification parameter.

In some embodiments of this application, the validity verification parameter may be a timer (timer) X.

For example, the terminal may determine an idle or inactive state measurement result that meets the accuracy requirements and is within X seconds before message1 as a valid measurement result.

It is to be understood that the value of X may be configured by the network-side device.

It should be noted that if the network-side device does not configure the X value, the terminal may not be required to perform validity verification.

In some embodiments of this application, in the case that the first message carries the first configuration information, the network-side device may send first indication information via the SIB1, to instruct the terminal to perform validity verification.

In some embodiments of this application, when the first configuration information is carried in the terminal information request message, the terminal may perform validity verification through the following steps S11 to S17, thereby reporting a valid measurement result.

Step S11: The terminal may perform early measurement in an idle or inactive state.

Step S12: The terminal sends an RRC connection setup request message or an RRC resume request message to the network-side device.

Step S13: The terminal receives an RRC connection setup message or an RRC resume message from the network-side device.

Step S14: The terminal determines whether an available measurement result is present.

Step S15: In the presence of an available measurement result, the terminal reports the presence of an available measurement result to the network-side device via an RRC connection setup complete or RRC resume complete message, that is, reports an availability indication (idleMeasAvailable).

It should be noted that the availability indication here is an availability indication of the current idle/inactive measurement.

Step S16: The terminal receives the terminal information request message from the network-side device.

It is to be understood that the terminal information request message may carry the configuration information of the validity verification parameter.

Step S17: The terminal determines validity of the measurement result based on the validity verification parameter, and reports a valid measurement result and/or a validity indication of the measurement result to the network-side device via a terminal information response message.

It should be noted that the validity indication is used to indicate the presence of a valid measurement result in the terminal to the network side.

It should be noted that the terminal may reselect to a target cell before step S12. If the terminal reselects to the target cell, the network-side device subsequently mainly refers to a network-side device of the target cell. It should be noted that the terminal may switch to a target cell before step S16. If the terminal switches to the target cell, the network-side device subsequently mainly refers to a network-side device of the target cell. Optionally, a handover command of the target cell may carry the validity verification parameter of the target cell, or carry a corresponding system message that contains the validity verification parameter.

It should be noted that the terminal in the inactive state may report an idle or inactive state measurement result in the RRC resume complete message. Therefore, for the terminal in the inactive state, validity verification may be performed before the reporting of the measurement result, or the RRC resume message may carry the configuration information of the validity verification parameter, or a system message that contains the validity verification parameter.

It should be noted that the terminal does not report the validity indication before reporting the valid measurement result in the terminal information response message.

In some embodiments of this application, the validity indication may be carried in the terminal information response message.

According to the validity verification method provided in this embodiment of this application, the validity verification parameter may be carried via the first configuration information in the handover command, the SIB1, the RRC release message, the terminal information request message, the RRC connection setup message, or the RRC resume message. Therefore, since the reception time of the first message is before the terminal sends a measurement result to the network-side device, timely receipt of the validity verification parameter can be ensured compared with receiving the validity verification parameter via the SIB11, thereby achieving the objective of ensuring the accuracy of validity verification of the measurement result.

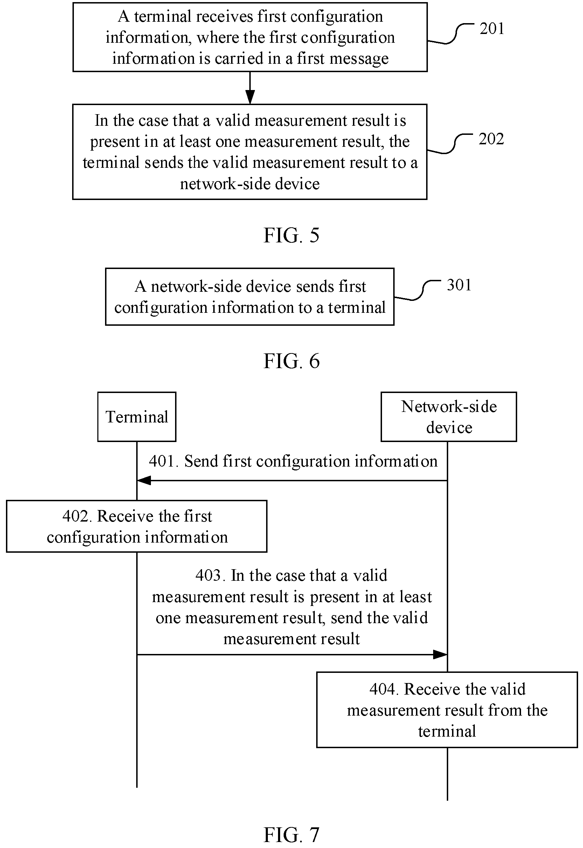

In some embodiments of this application, with reference to FIG. 4, as shown in FIG. 5, after step 201, the validity verification method provided in this embodiment of this application may further include the following step 202.

Step 202: In the case that a valid measurement result is present in at least one measurement result, the terminal sends the valid measurement result to the network-side device.

In some embodiments of this application, the at least one measurement result may be a measurement result obtained for mobility purposes, that is, a measurement result for cell selection or reselection; or may be an idle or inactive state measurement result, that is, an early measurement result.

In this way, based on the valid measurement result sent by the terminal, the network-side device can ensure timely receipt of the validity verification parameter, thereby achieving the objective of ensuring the accuracy of validity verification of the measurement result.

In some embodiments of this application, the first configuration information may be carried in the handover command. The first configuration information may include configuration information of a validity verification parameter corresponding to a target cell, or a first system message.

In some embodiments of this application, the first system message may carry the configuration information of the validity verification parameter corresponding to the target cell.

In some embodiments of this application, the handover command may be used to instruct the terminal to switch to the target cell.

In some embodiments of this application, in the case that the terminal has accessed a cell, if the terminal has switched from the cell to the target cell before reporting the measurement result in the cell, the first configuration information may be carried in the cell handover command sent by the network-side device to the terminal, so that the terminal can receive the first configuration information in a timely manner.

In this way, during cell handover, the terminal can receive the first configuration information in a timely manner via the handover command, so that validity verification can be performed using the validity verification parameter in the first configuration information.

In some embodiments of this application, the first configuration information may be carried in the SIB1. The first configuration information includes at least one of configuration information of the validity verification parameter.

In some embodiments of this application, in the case that the first configuration information is carried in the SIB1, the first configuration information may further include first indication information.

The first indication information may be used to instruct the terminal to perform validity verification.

In some embodiments of this application, the first system message may be a system message broadcast by the network-side device.

In some embodiments of this application, the first indication information may indicate that the terminal is allowed to determine validity of R18 enhanced idle or inactive state measurement. In other words, the first indication information may indicate that the terminal is allowed to report a validity indication, so that the network-side device can learn the presence of a valid measurement result.

In some embodiments of this application, the configuration information of the validity verification parameter and the first indication information may be carried in a same system message, or may be carried in two separate system messages. This is not specifically limited in embodiments of this application.

It should be noted that if the configuration information of the validity verification parameter and the first indication information are carried in the same system message, it may be considered that the validity verification may be performed by the terminal provided that the network-side device has configured the validity verification parameter.

In some embodiments of this application, in the case that the first configuration information is carried in the SIB1, the terminal may report a valid measurement result through the following steps S21 to S27.

Step S21: The terminal receives the first configuration information via the SIB1.

Step S22: The terminal sends an RRC connection setup request or an RRC resume request to the network-side device.

Step S23: The terminal receives an RRC connection setup message or an RRC resume message from the network-side device.

Step S24: The terminal determines validity of the measurement result using the validity verification parameter in the first configuration information.

It is to be understood that the terminal may start to determine the validity of the measurement result upon sending the message1.

Step S25: In the case that there is a valid measurement result, the terminal reports that the measurement result is valid via a 1-bit message carried in an RRC connection setup complete or RRC resume complete message. For example, the bit message may reuse the availability indication (idleMeasAvailable) of the idle or inactive state measurement.

For example, the bit message may further be a separate new bit indicator.

Step S26: The terminal receives the terminal information request message from the network-side device.

It is to be understood that the terminal information request message may be used to request the terminal to report the measurement result.

Step S27: The terminal reports the valid measurement result to the network-side device via the terminal information request response message.

It should be noted that the terminal may reselect to the target cell before step S21. In this case, the first system message (SIB1) in S21 refers to a system message of the target cell. In another case, the terminal may reselect to the target cell after step S21 and before step S22. In this case, it is necessary to read SIB1 information of the target cell to obtain the validity verification parameter, and then proceed to a step following step S22. The network-side device subsequently mainly refers to a network-side device of the target cell.

In this way, the validity verification parameter can be carried via the first configuration information in the SIB1. Therefore, during the process of RRC connection setup or resumption, the terminal can ensure, via the SIB1, timely receipt of the validity verification parameter, thereby achieving the objective of ensuring the accuracy of validity verification of the measurement result.

In some embodiments of this application, the first configuration information may be carried in the RRC release message. The first configuration information may include at least one validity verification parameter.

In some embodiments of this application, each validity verification parameter corresponds to one cell in a validity cell list (validity Cell List) under a validity area list (validityAreaList).

In some embodiments of this application, when a failure such as an RRC reconfiguration failure, a handover failure, a radio link failure, or an integrity protection failure occurs between the terminal and the network-side device, an RRC release (Release) procedure is initiated, transferring the terminal from an RRC connected state to an RRC idle or inactive state.

In some embodiments of this application, the validity area list may be a list of areas list available to the terminal determined by the network-side device.

In some embodiments of this application, the valid cell may be a cell in an area available to the terminal determined by the network-side device.

In some embodiments of this application, in the case that the first configuration information is carried in the RRC release message, the first configuration information may be configured directly in the RRC release message, or may be configured in the validity cell list in the RRC release message.

In some embodiments of this application, when the first configuration information is configured in the RRC release message, the first configuration information may be separately carried in the RRC release message. In this case, the validity verification parameter in the first configuration information may be used to verify a measurement result in a cell on which the terminal is currently camped.

In some embodiments of this application, when the first configuration information is configured in the validity cell list in the RRC release message, each cell in the validity cell list may correspond to one validity verification parameter. In this case, the first configuration information may include at least one validity verification parameter, and each validity verification parameter may be used to verify a measurement result in a cell corresponding to the validity verification parameter.

In some embodiments of this application, in the case that the first configuration information is carried in the RRC release message, the terminal may report a valid measurement result through the following steps S31 to S38.

Step S31: The terminal receives the RRC release message from the network-side device.

Step S32: The terminal performs early measurement in an idle or inactive state.

Step S33: The terminal sends an RRC connection setup request or an RRC resume request to the network-side device.

Step S34: The terminal receives an RRC connection setup message or an RRC resume message from the network-side device.

Step S35: The terminal determines validity of the measurement result based on the validity verification parameter in the RRC release message.

Step S36: In the case that there is a valid measurement result, the terminal reports that the measurement is valid via a 1-bit message carried in an RRC connection setup complete message or an RRC resume complete message.

Step S37: The terminal receives the terminal information request message from the network-side device.

It is to be understood that the terminal information request message may be used to request the terminal to report the measurement result.

Step S38: The terminal reports the valid measurement result to the network-side device via the terminal information request response message.

It should be noted that the terminal may reselect to a target cell before step S33. If the terminal reselects to the target cell, the network-side device subsequently mainly refers to a network-side device of the target cell.

In this way, the validity verification parameter can be carried via the first configuration information in the RRC release message. Therefore, during the process of RRC connection setup or resumption, the terminal can ensure, via the RRC release message, timely receipt of the validity verification parameter, thereby achieving the objective of ensuring the accuracy of validity verification of the measurement result.

In some embodiments of this application, the first configuration information may be carried in the RRC connection setup message. The first configuration information may include configuration information of the validity verification parameter, or a second system message.

In some embodiments of this application, the second system message may carry the configuration information of the validity verification parameter.

In some embodiments of this application, in the case that the first configuration information is carried in the RRC connection setup message, the terminal may report a valid measurement result through the following steps S41 to S47.

Step S41: The terminal performs early measurement in an idle or inactive state.

Step S42: The terminal sends an RRC connection setup request to the network-side device.

Step S43: The terminal receives an RRC connection setup message from the network-side device.

Step S44: The terminal determines validity of the measurement result based on the validity verification parameter in the RRC connection setup message.

Step S45: In the case that there is a valid measurement result, the terminal reports that the measurement is valid via a 1-bit message carried in an RRC connection setup complete message or an RRC resume complete message.

Step S46: The terminal receives the terminal information request message from the network-side device.

It is to be understood that the terminal information request message may be used to request the terminal to report the measurement result.

Step S47: The terminal reports the valid measurement result to the network-side device via the terminal information request response message.

It should be noted that the terminal may reselect to a target cell before step S42. If the terminal reselects to the target cell, the network-side device subsequently mainly refers to a network-side device of the target cell.

In this way, the validity verification parameter can be carried via the first configuration information in the RRC connection setup message. Therefore, during the process of RRC connection setup or resumption, the terminal can ensure, via the RRC connection setup message, timely receipt of the validity verification parameter, thereby achieving the objective of ensuring the accuracy of validity verification of the measurement result.

In some embodiments of this application, the first configuration information may be carried in the RRC resume message. The first configuration information may include configuration information of the validity verification parameter, or a third system message.

In some embodiments of this application, the third system message may carry the configuration information of the validity verification parameter.

In some embodiments of this application, for the terminal in an inactive state, the measurement result may be reported in the RRC resume complete message. Therefore, the network-side device may send the first configuration information to the terminal via the RRC resume message, so that the terminal can determine the validity of the measurement result before reporting a valid measurement result.

In this way, the validity verification parameter can be carried via the first configuration information in the RRC resume message. Therefore, before reporting the valid measurement result, the terminal may determine the validity of the measurement result and report the valid measurement result to the network-side device, thereby achieving the objective of ensuring the accuracy of validity verification of the measurement result.

In some embodiments of this application, after step 201, the validity verification method provided in this embodiment of this application may further include the following step 203.

Step 203: In the case that a valid measurement result is present in at least one measurement result, the terminal sends second indication information to the network-side device.

The second indication information may indicate the presence of a valid measurement result, that is, a validity indication.

It should be noted that the validity indication may reuse the availability indication (idleMeasAvailable) of the idle or inactive state measurement. Alternatively, the validity indication may be a separate new bit indicator. This is not specifically limited in embodiments of this application.

In some embodiments of this application, the second indication information may be carried in a second message. The second message may include at least one of an RRC connection setup complete message or an RRC resume complete message.

In some embodiments of this application, the terminal can use the second indication information, making the network-side device determine that a valid measurement result is present in the terminal, so that the network-side device can request the reporting of the valid measurement result from the terminal based on the indication, and configure a secondary carrier or a primary secondary carrier for the terminal based on the valid measurement result reported by the terminal.

In some embodiments of this application, before step 201, the validity verification method provided in this embodiment of this application may include the following step 204.

Step 204: The terminal sends third indication information to the network-side device.

The third indication information may be used to instruct the network-side device to configure a validity verification parameter for the terminal.

In some embodiments of this application, the third indication information may be carried in a third message. The third message may include at least one of an RRC connection setup complete message or an RRC resume complete message.

In some embodiments of this application, for a terminal that supports R18 validity verification, the third indication information may be additionally and specifically sent to the network-side device, to indicate that the network-side device can configure validity verification for the terminal.

In some embodiments of this application, before receiving the first configuration information, the terminal, in the case of supporting validity verification, may send the third indication information to the network-side device, using the third indication information to instruct the network-side device to configure a validity verification parameter for the terminal. That is, after receiving the third indication information, the network-side device may determine that the terminal supports validity verification, and may configure the validity verification parameter for the terminal.

In this way, by means of the third indication information, the network-side device can learn capability information of the terminal in advance, so that the network-side device may configure the validity verification parameter only for the terminal that supports R18 validity verification, thereby avoiding unnecessary configuration by the network device and preventing waste of resources on the network-side device.

In some embodiments, the method further includes the following: the terminal may further receive first information from the network-side device. The first information is used to enable the terminal to report a measurement result of enhanced measurement, where the measurement result of the enhanced measurement refers to a valid early measurement result and a valid cell selection/reselection measurement result obtained after validity verification, or an early measurement result and a cell selection/reselection measurement result obtained without validity verification (when the network-side device does not configure the validity verification parameter). The early measurement result is a measurement result obtained in an early measurement process for a terminal that supports early measurement. The measurement result is an available measurement result, and may include at least one of a valid measurement result or an invalid measurement result. The measurement result of the cell selection/reselection is a measurement result obtained by the terminal in a cell selection/reselection process. The enhanced measurement refers to measurement in which the terminal, after being configured with the validity verification parameter, can report early measurement and/or cell selection/reselection measurement results obtained after validity verification.

For example, the aforementioned enhanced measurement may refer to enhanced measurement introduced by the R18 release, and the early measurement may refer to early measurement introduced by the R16 release. The enhanced measurement of the R18 release and the early measurement of the R16 release are used below as examples for description.

For example, the first information may be 1 bit, and the network-side device may use the 1 bit to enable the terminal to report a measurement result of the R18 enhanced measurement, where the measurement result of the R18 enhanced measurement may include a valid R16 early measurement result and/or a valid cell selection/reselection measurement result.

For example, the first information may also be 2 bits, and the network-side device may use the 2 bits to enable the terminal to report a valid R16 early measurement result and a valid cell selection/reselection measurement result, respectively.

In this embodiment, the network-side device can flexibly control, by enabling the terminal to or not to report the measurement result of the enhanced measurement, the measurement result reported by the terminal, so that the network can obtain the valid measurement result, thereby improving the reliability and accuracy of configuring DC or CA.

In some embodiments, the method further includes the following: the terminal performs early measurement and/or cell selection/reselection measurement; and if there is a valid early measurement and/or cell selection/reselection measurement, the terminal reports second information to the network-side device. The second information is used to indicate the presence of a measurement result of the enhanced measurement in the terminal to the network-side device. That is, there is a valid early measurement result and/or a valid cell selection/reselection measurement result.

For example, the second information may be 1 bit; that is, the terminal may use the 1 bit to indicate the presence of the measurement result of the R18 enhancement measurement in the terminal to the network side. That is, there is a valid R16 early measurement result and/or a valid cell selection/reselection measurement result. Optionally, the 1-bit indicator may also reuse an availability indication of the R16 early measurement, that is, to indicate the presence of an available measurement result of the R16 early measurement to the network-side device.

For example, the second information may also be 2 bits; that is, the terminal may separately use 1 bit to indicate the presence of a valid R16 early measurement result and the presence of a valid cell selection/reselection measurement result in the terminal to the network side.

For example, the second information may also be carried in an RRC connection setup complete message/resume complete message sent by the terminal.

In this embodiment, the terminal may notify, via the second information, the network whether a valid measurement result is present, and the network side may request a measurement result from the terminal based on an indication from the terminal, preventing the network from requesting an invalid measurement result.

In some embodiments, the terminal receives third information indicated by the network-side device. The third information is used for the network-side device to instruct the terminal to report a target measurement result, where the target measurement result includes at least one of: a measurement result of R16 early measurement, a valid measurement result of R18 early measurement, a valid measurement result of R18 cell selection/reselection, an invalid measurement result of R18 early measurement, or an invalid measurement result of R18 cell selection/reselection. The invalid R18 measurement result is a measurement result reported by the terminal when the network-side device does not configured a validity verification parameter. In some embodiments, the third information is used to indicate a measurement result type reported by the terminal.

For example, the third information may be 1 bit, and the 1 bit indicates that the terminal reports the valid R18 measurement result (including the valid R16 early measurement result and/or the valid cell reselection measurement result). Optionally, when the bit is absent, it indicates that the terminal needs to report the valid R18 measurement result. In another manner, the bit may reuse the measurement reporting indication of the R16 early measurement. For example, when the bit is present, it may indicate that only the valid R18 measurement result is reported. Optionally, it may indicate that the measurement result of the R16 early measurement result and the valid R18 measurement result may be reported.

For example, the third information may be 2 bits, which respectively indicate that the terminal reports the valid R16 measurement result and the valid cell reselection measurement result. Optionally, if a bit corresponding to each measurement result is absent, it indicates that the terminal requires the corresponding measurement result.

In this embodiment, the terminal may report a target measurement result based on the indication from the network-side device, preventing the terminal from reporting an unnecessary target measurement result that is not required by the network-side device.

In some embodiments, the terminal reports target information, where the target information includes at least one of: a measurement result of enhanced measurement, a measurement result of early measurement, or fourth information. The fourth information is used to indicate a type of a reported measurement result, for example, whether the reported measurement result is an R18 enhanced measurement result or an R16 early measurement result.

For example, the fourth information may include first sub-information, where the first sub-information indicates that the reported target information is the measurement result of the enhanced measurement, which, for example, may be a measurement result of R18 enhanced measurement. For example, 2 bits may be used for separate indication. For example, one of the bits indicates that the early measurement result indicated as R16 is reported, and the other bit indicates that the valid R18 measurement result is reported. Optionally, when the bits are absent, the two measurement results are included by default.

For example, the first sub-information may also be 1 bit, and the bit indicates that the reported target information is the measurement result of the R18 enhanced measurement. An implementation may be as follows: When the terminal reports only the valid R18 measurement result, the terminal uses the 1-bit to indicate that the reported measurement result is the valid R18 measurement result. Optionally, when the bit is absent, there is the valid R18 measurement result by default.

For example, the fourth information may include second sub-information, where the second sub-information indicates that the reported target information is the early measurement result, which, for example, is the measurement result of the R16 early measurement. For example, an implementation may be as follows: The terminal reports only the measurement result of the R16 early measurement, and the terminal uses the 1 bit to indicate that the reported measurement result if the measurement result of the R16 early measurement. Optionally, when the bit is absent, there is the measurement result of the R16 early measurement by default.

For example, the fourth information may include third sub-information, where the third sub-information indicates that the reported target information is the early measurement result, which, for example, is the valid measurement result of the R18 early measurement.

For example, the fourth information may include fourth sub-information, where the fourth sub-information indicates that the reported target information is the valid measurement result of the cell selection/reselection, which, for example, is the valid measurement result of the R18 cell selection/reselection.

In this embodiment, the terminal may indicate the type of the reported measurement result to the network-side device, preventing a situation where the network-side device, when the reported measurement results from the terminal include both the R16 early measurement result and the valid R18 measurement result, is unable to distinguish these measurement results, which causes the network-side device to use the R16 early measurement result, resulting in an inaccurate DC or CA configuration.

The solution of this application is described below with reference to a specific embodiment.

Step 1: The terminal receives first information from the network side, where the first information is used to enable the terminal to report an R18 measurement result obtained after validity verification. Optionally, the first information may also be two bits that are used to enable the terminal to report a valid R16 early measurement result and a valid cell reselection measurement result, respectively.

Step 2: The terminal performs early measurement and/or cell reselection measurement of the R16.

Step 3: The terminal sends an RRC connection setup/connection resume request message.

Step 4: The terminal receives an RRC connection setup message/resume message, and the optional RRC resume message may request the terminal to report a measurement result.

Step 5: The terminal sends an RRC connection setup complete message/resume complete message. If there is a valid R18 measurement result (including a valid R16 early measurement result and/or a valid cell reselection measurement result), second information is carried in the RRC connection setup complete message/resume complete message, where the second information indicates the presence of a valid measurement result to the network side. For example, 1 bit is used to indicate the presence of a valid measurement result. Optionally, the 1 bit indicator may reuse the availability indication of the R16 early measurement. Optionally, two bits may be used to indicate the presence of a valid R16 measurement result and the presence of a valid cell reselection measurement result, respectively.

Step 6: The terminal receives third information from the network side, where the third information is used for the network side to instruct the terminal to report a measurement result, including at least one of the following:

One bit is used to indicate that the terminal reports the valid R18 measurement result (including the valid R16 early measurement result and the valid cell reselection measurement result). Optionally, it may also separately indicate that the terminal reports the valid R16 measurement result and/or the valid cell reselection measurement result. When the bit is present, it indicates that the terminal needs to report a valid measurement result.

The R16 measurement reporting indication is reused. When the bit is present, it may indicate that only the valid R18 measurement result is reported. Optionally, it may indicate that the measurement result of the R16 early measurement and the valid R18 measurement result may be reported.

Step 7: The terminal reports the measurement result, including at least one of the following:

The terminal reports the early measurement result of the R16 and the valid R18 measurement result.

Fourth information indicates which of the measurement results reported is a measurement result of the R16 early measurement, and which is a valid R18 measurement result. An implementation may be that, 2 bits may be used for separate indication. For example, one of the bits indicates that the early measurement result of the R16 is reported, and the other bit indicates that the valid R18 measurement result is reported. Optionally, when the bits are absent, the two measurement results are included by default.

The terminal reports the valid R18 measurement result, and indicates, via the fourth indication information, that the measurement result is the measurement result of the R18. For example, 1 bit is used to indicate that the measurement result is the measurement result of the R18. Optionally, if the bit is absent, there is the measurement result of the R18 by default.

The terminal reports the R16 measurement result, and indicates, via the fourth indication information, that the measurement result is the measurement result of the R16. For example, 1 bit is used to indicate that the measurement result is the measurement result of the R16. Optionally, if the bit is absent, there is the measurement result of the R16 by default.

FIG. 6 is a schematic flowchart of a validity verification method according to an embodiment of this application. As shown in FIG. 6, the validity verification method may include the following step 301.

Step 301: A network-side device sends first configuration information to a terminal.

The first configuration information may be associated with a validity verification parameter.

In some embodiments of this application, the first configuration information may be carried in a first message, and the first message may include at least one of: a handover command; an SIB1; an RRC release message; a terminal information request message; an RRC connection setup message; or an RRC resume message.

In some embodiments of this application, after step 301, the validity verification method provided in this embodiment of this application may further include the following step 302.

Step 302: The network-side device receives a valid measurement result from the terminal.

In some embodiments of this application, the first configuration information may be carried in the handover command. The first configuration information includes configuration information of a validity verification parameter corresponding to a target cell, or a first system message.

The first system message carries the configuration information of the validity verification parameter corresponding to the target cell.

In some embodiments of this application, the handover command may be used to instruct the terminal to switch to the target cell.

In some embodiments of this application, the first configuration information may be carried in the SIB1. The first configuration information may include at least one of configuration information of the validity verification parameter.

In some embodiments of this application, in the case that the first configuration information is carried in the SIB1, the first configuration information may further include first indication information. The first indication information is used to instruct the terminal to perform validity verification.

In some embodiments of this application, the first configuration information may be carried in the RRC release message. The first configuration information may include at least one validity verification parameter.

Each validity verification parameter corresponds to one cell in a validity cell list under a validity area list.

In some embodiments of this application, the first configuration information may be carried in the RRC connection setup message. The first configuration information may include configuration information of the validity verification parameter, or a second system message.

The second system message may carry the configuration information of the validity verification parameter.

In some embodiments of this application, the first configuration information may be carried in the RRC resume message. The first configuration information may include configuration information of the validity verification parameter, or a third system message.

The third system message may carry the configuration information of the validity verification parameter.

In some embodiments of this application, after step 301, the validity verification method provided in this embodiment of this application may further include the following step 303.

Step 303: The network-side device receives second indication information from the terminal.

The second indication information may indicate the presence of a valid measurement result.

In some embodiments of this application, the second indication information may be carried in at least one of the following messages: an RRC connection setup complete message; and an RRC resume complete message.

In some embodiments of this application, before step 301, the validity verification method provided in this embodiment of this application may further include the following step 304.

Step 304: The network-side device receives third indication information from the terminal.

The third indication information may be used to instruct the network-side device to configure a validity verification parameter for the terminal.

In some embodiments of this application, the third indication information may be carried in at least one of the following messages: an RRC connection setup complete message; and an RRC resume complete message.

It should be noted that for specific descriptions of the foregoing step 301 to step 304, reference may be made to detailed descriptions of the foregoing step 201 to step 204. To avoid repetitions, details are not described herein again.

According to the validity verification method provided in this embodiment of this application, the validity verification parameter may be carried via the first configuration information in the handover command, the SIB1, the RRC release message, the terminal information request message, the RRC connection setup message, or the RRC resume message. Therefore, since the reception time of the first message is before the terminal sends a measurement result to the network-side device, timely receipt of the validity verification parameter can be ensured compared with receiving the validity verification parameter via the SIB11, thereby achieving the objective of ensuring the accuracy of validity verification of the measurement result.

FIG. 7 is a schematic flowchart of a validity verification method according to an embodiment of this application. As shown in FIG. 7, the validity verification method may include the following step 401 and step 402.

Step 401: A network-side device sends first configuration information to a terminal.

The first configuration information carries a validity verification parameter. The first configuration information is carried in at least one of the following messages: a handover command; an SIB1; an RRC release message; a terminal information request message; an RRC connection setup message; and an RRC resume message.

Step 402: The terminal receives the first configuration information.

In some embodiments of this application, as shown in FIG. 7, after step 402, the validity verification method provided in this embodiment of this application may further include the following step 403 and step 404.

Step 403: In the case that a valid measurement result is present in at least one measurement result, the terminal sends the valid measurement result to the network-side device.

Step 404: The network-side device receives the valid measurement result from the terminal.

In some embodiments of this application, the first configuration information is carried in the handover command. The first configuration information includes configuration information of a validity verification parameter corresponding to a target cell, or a first system message. The first system message carries the configuration information of the validity verification parameter corresponding to the target cell.

The handover command is used to instruct the terminal to switch to the target cell.

In some embodiments of this application, the first configuration information is carried in the SIB1. The first configuration information includes at least one of configuration information of the validity verification parameter or first indication information.

The first indication information is used to instruct the terminal to perform validity verification.

In some embodiments of this application, the first configuration information is carried in the RRC release message. The first configuration information includes at least one validity verification parameter.

Each validity verification parameter corresponds to one cell in a validity cell list under a validity area list.

In some embodiments of this application, the first configuration information is carried in the RRC connection setup message. The first configuration information includes configuration information of the validity verification parameter, or a second system message.

The second system message carries the configuration information of the validity verification parameter.

In some embodiments of this application, the first configuration information is carried in the RRC resume message. The first configuration information includes configuration information of the validity verification parameter, or a third system message.

The third system message carries the configuration information of the validity verification parameter.

In some embodiments of this application, after step 402, the validity verification method provided in this embodiment of this application may further include the following step 405 and step 406.

Step 405: In the case that a valid measurement result is present in at least one measurement result, the terminal sends second indication information to the network-side device.

The second indication information indicates the presence of a valid measurement result. The second indication information is carried in at least one of the following messages: an RRC connection setup complete message; and an RRC resume complete message.

Step 406: The network-side device receives the second indication information from the terminal.

In some embodiments of this application, before step 401, the validity verification method provided in this embodiment of this application may further include the following step 407 and step 408.

Step 407: The terminal sends third indication information to the network-side device.

The third indication information is used to instruct the network-side device to configure a validity verification parameter for the terminal. The third indication information is carried in at least one of the following messages: an RRC connection setup complete message; and an RRC resume complete message.

Step 408: The network-side device receives the third indication information from the terminal.

According to the validity verification method provided in this embodiment of this application, the validity verification parameter may be carried via the first configuration information in the handover command, the SIB1, the RRC release message, the terminal information request message, the RRC connection setup message, or the RRC resume message. Therefore, since the reception time of the first message is before the terminal sends a measurement result to the network-side device, timely receipt of the validity verification parameter can be ensured compared with receiving the validity verification parameter via the SIB11, thereby achieving the objective of ensuring the accuracy of validity verification of the measurement result.

The foregoing method embodiments or various possible implementations in the foregoing method embodiments may be separately performed, or any two or more embodiments or implementations may be performed in combination with each other. This may be specifically determined based on an actual use requirement. This is not limited in the embodiments of this application.

The validity verification method provided in this embodiment of this application may be performed by a validity verification apparatus. In this embodiment of this application, a validity verification apparatus provided in an embodiment of this application is described through an example in which the validity verification apparatus performs the validity verification method.

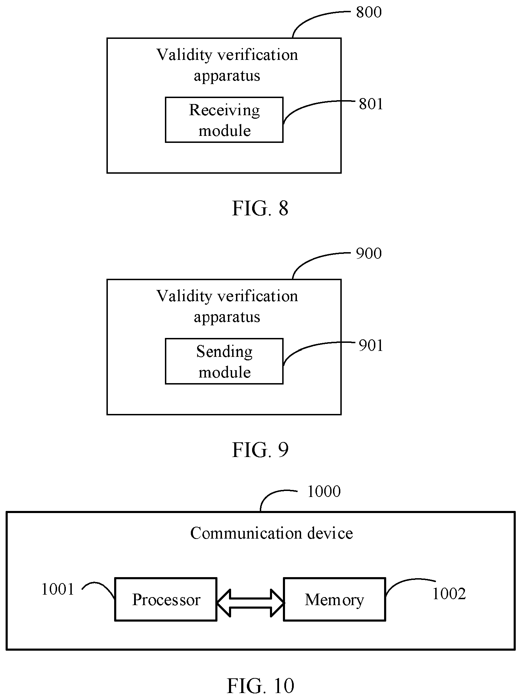

An embodiment of this application provides a validity verification apparatus 800. As shown in FIG. 8, the validity verification apparatus 800 includes a receiving module 801.

The receiving module 801 is configured to receive first configuration information associated with a validity verification parameter, where the first configuration information is carried in a first message, and the first message includes at least one of: a handover command; an SIB1; a radio resource control RRC release message; a terminal information request message; an RRC connection setup message; or an RRC resume message.

In a possible implementation, the apparatus further includes a sending module.

The sending module is configured to, after the receiving module 801 receives the first configuration information, in the case that a valid measurement result is present in at least one measurement result, send the valid measurement result to a network-side device.

In a possible implementation, the first configuration information is carried in the handover command. The first configuration information includes configuration information of a validity verification parameter corresponding to a target cell, or a first system message. The first system message carries the configuration information of the validity verification parameter corresponding to the target cell.

The handover command is used to instruct the terminal to switch to the target cell.

In a possible implementation, the first configuration information is carried in the SIB1, and the first configuration information includes configuration information of the validity verification parameter.

In a possible implementation, the first configuration information is carried in the SIB1, and the first configuration information further includes first indication information. The first indication information is used to instruct the terminal to perform validity verification.

In a possible implementation, the first configuration information is carried in the RRC release message, and the first configuration information includes configuration information of at least one validity verification parameter.

Each validity verification parameter corresponds to one cell in a validity cell list under a validity area list.

In a possible implementation, the first configuration information is carried in the RRC connection setup message, and the first configuration information includes configuration information of the validity verification parameter, or a second system message. The second system message carries the configuration information of the validity verification parameter.

In a possible implementation, the first configuration information is carried in the RRC resume message, and the first configuration information includes configuration information of the validity verification parameter, or a third system message. The third system message carries the configuration information of the validity verification parameter.

In a possible implementation, the sending module is further configured to, after the receiving module 801 receives the first configuration information, in the case that a valid measurement result is present in at least one measurement result, send, by the terminal, second indication information to the network-side device, where the second indication information indicates the presence of a valid measurement result.

In a possible implementation, the second indication information is carried in a second message. The second message includes at least one of:
an RRC connection setup complete message; or
an RRC resume complete message.

In a possible implementation, the sending module is further configured to, before the receiving module 801 receives the first configuration information, send third indication information to the network-side device, where the third indication information is used to instruct the network-side device to configure a validity verification parameter for the terminal.

In a possible implementation, the third indication information is carried in a third message. The third message includes at least one of:
an RRC connection setup complete message; or
an RRC resume complete message.

According to the validity verification apparatus provided in this embodiment of this application, the validity verification parameter may be carried via the first configuration information in the handover command, the SIB1, the RRC release message, the terminal information request message, the RRC connection setup message, or the RRC resume message. Therefore, since the reception time of the first message is before the terminal sends a measurement result to the network-side device, timely receipt of the validity verification parameter can be ensured compared with receiving the validity verification parameter via the SIB11, thereby achieving the objective of ensuring the accuracy of validity verification of the measurement result.

An embodiment of this application provides a validity verification apparatus 900. As shown in FIG. 9, the validity verification apparatus 900 includes a sending module 901.

The sending module 901 is configured to send first configuration information associated with a validity verification parameter to a terminal, where the first configuration information is carried in a first message, and the first message includes at least one of: a handover command; an SIB1; an RRC release message; a terminal information request message; an RRC connection setup message; or an RRC resume message.

In a possible implementation, the apparatus further includes a receiving module.

The receiving module is configured to, after the sending module 901 sends the first configuration information to the terminal, receive a valid measurement result from the terminal.

In a possible implementation, the first configuration information is carried in the handover command. The first configuration information includes configuration information of a validity verification parameter corresponding to a target cell, or a first system message. The first system message carries the configuration information of the validity verification parameter corresponding to the target cell.

The handover command is used to instruct the terminal to switch to the target cell.

In a possible implementation, the first configuration information is carried in the SIB1, and the first configuration information includes configuration information of the validity verification parameter.

In a possible implementation, the first configuration information is carried in the SIB1, and the first configuration information further includes first indication information. The first indication information is used to instruct the terminal to perform validity verification.

In a possible implementation, the first configuration information is carried in the RRC release message, and the first configuration information includes configuration information of at least one validity verification parameter.

Each validity verification parameter corresponds to one cell in a validity cell list under a validity area list.

In a possible implementation, the first configuration information is carried in the RRC connection setup message, and the first configuration information includes configuration information of the validity verification parameter, or a second system message. The second system message carries the configuration information of the validity verification parameter.

In a possible implementation, the first configuration information is carried in the RRC resume message, and the first configuration information includes configuration information of the validity verification parameter, or a third system message. The third system message carries the configuration information of the validity verification parameter.

In a possible implementation, the receiving module is further configured to, after the sending module 901 sends the first configuration information to the terminal, receive second indication information from the terminal, where the second indication information indicates the presence of a valid measurement result.

In a possible implementation, the second indication information is carried in a second message. The second message includes at least one of:
an RRC connection setup complete message; or
an RRC resume complete message.

In a possible implementation, the receiving module is further configured to, before the sending module 901 sends the first configuration information to the terminal, receive third indication information from the terminal, where the third indication information is used to instruct the network-side device to configure a validity verification parameter for the terminal.

In a possible implementation, the third indication information is carried in a third message. The third message includes at least one of:
an RRC connection setup complete message; or
an RRC resume complete message.

According to the validity verification apparatus provided in this embodiment of this application, the validity verification parameter may be carried via the first configuration information in the handover command, the SIB1, the RRC release message, the terminal information request message, the RRC connection setup message, or the RRC resume message. Therefore, since the reception time of the first message is before the terminal sends a measurement result to the network-side device, timely receipt of the validity verification parameter can be ensured compared with receiving the validity verification parameter via the SIB11, thereby achieving the objective of ensuring the accuracy of validity verification of the measurement result.

The validity verification apparatus in this embodiment of this application may be an electronic device, for example, an electronic device with an operating system, or may be a component such as an integrated circuit or a chip in the electronic device. The electronic device may be a terminal, or may be another device different from a terminal. For example, the terminal may include, but is not limited to, the foregoing listed types of the terminal 11. The another device may be a server, a network attached storage (Network Attached Storage, NAS), or the like. This is not specifically limited in embodiments of this application.

The validity verification apparatus provided in this embodiment of this application can implement the processes that are implemented in the method embodiments shown in FIG. 3 to FIG. 7, and can achieve the same technical effects. To avoid repetition, details are not described herein again.

As shown in FIG. 10, an embodiment of this application further provides a communication device 1000, including a processor 1001 and a memory 1002. The memory 1002 has stored thereon a program or instructions executable on the processor 1001. For example, when the communication device 1000 is a terminal, the program or the instructions, when executed by the processor 1001, implement the steps of the foregoing validity verification method embodiment and can achieve the same technical effects. When the communication device 1000 is a network-side device, the program or the instructions, when executed by the processor 1001, implement the steps of the foregoing validity verification method embodiment and can achieve the same technical effects. To avoid repetition, details are not described herein again.

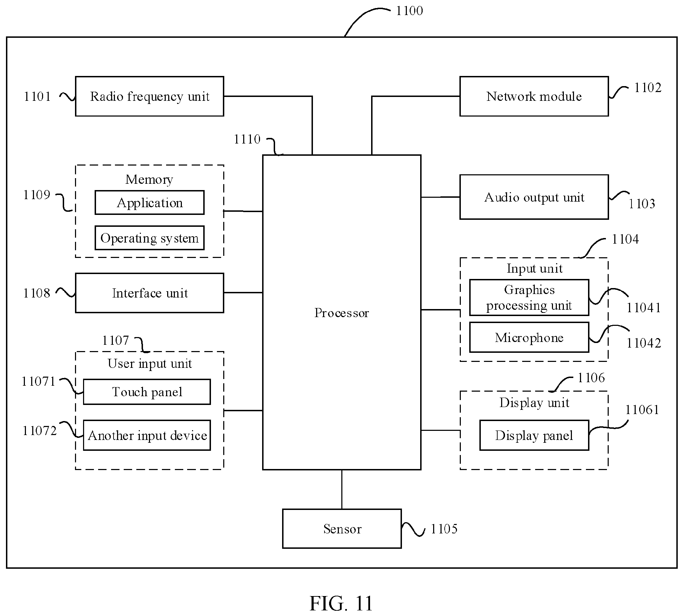

An embodiment of this application further provides a terminal, including a processor and a communication interface. The communication interface is coupled to the processor. The processor is configured to execute a program or instructions to implement the steps in the method embodiment shown in FIG. 4. The terminal embodiment corresponds to the foregoing terminal-side method embodiment. The implementation processes and implementations of the foregoing method embodiment are applicable to the terminal embodiment and can achieve the same technical effects. Specifically, FIG. 11 is a diagram of a hardware structure of a terminal for implementing an embodiment of this application.

The terminal 1100 includes but is not limited to at least some components in a radio frequency unit 1101, a network module 1102, an audio output unit 1103, an input unit 1104, a sensor 1105, a display unit 1106, a user input unit 1107, an interface unit 1108, a memory 1109, and a processor 1110.

A person skilled in the art may understand that the terminal 1100 may further include a power supply (for example, a battery) that supplies power to each component. The power supply may be logically connected to the processor 1110 through a power management system, to implement functions such as charging management, discharging management, and power consumption management through the power management system. The structure of the terminal shown in FIG. 11 does not constitute a limitation on the terminal. The terminal may include more or fewer components than those shown in the figure, or combine some components, or have different component arrangements. Details are not described herein again.

It should be understood that in this embodiment of this application, the input unit 1104 may include a graphics processing unit (Graphics Processing Unit, GPU) 11041 and a microphone 11042. The graphics processing unit 11041 processes image data of a still picture or a video obtained by an image capture apparatus (such as a camera) in a video capture mode or an image capture mode. The display unit 1106 may include a display panel 11061, and the display panel 11061 may be configured in a form of a liquid crystal display, an organic light-emitting diode, or the like. The user input unit 1107 includes at least one of a touch panel 11071 and another input device 11072. The touch panel 11071 is also referred to as a touchscreen. The touch panel 11071 may include two parts: a touch detection apparatus and a touch controller. The another input device 11072 may include but is not limited to a physical keyboard, a function key (such as a volume control key or an on/off key), a trackball, a mouse, and a joystick. Details are not described herein again.

In this embodiment of this application, after receiving downlink data from a network-side device, the radio frequency unit 1101 may transmit the downlink data to the processor 1110 for processing. In addition, the radio frequency unit 1101 may transmit uplink data to the network-side device. Generally, the radio frequency unit 1101 includes but is not limited to an antenna, an amplifier, a transceiver, a coupler, a low-noise amplifier, a duplexer, and the like.

The memory 1109 may be configured to store a software program or instructions and various types of data. The memory 1109 may mainly include a first storage area for storing a program or instructions and a second storage area for storing data. The first storage area may store an operating system, an application or instructions required by at least one function (for example, a sound playback function or an image playback function), and the like. In addition, the memory 1109 may include a volatile memory or a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synch link dynamic random access memory (Synch link DRAM, SLDRAM), and a direct rambus random access memory (Direct Rambus RAM, DRRAM). The memory 1109 in this embodiment of this application includes but is not limited to these memories and any other suitable type of memory.

The processor 1110 may include one or more processing units. Optionally, the processor 1110 integrates an application processor and a modem processor. The application processor mainly processes operations related to an operating system, a user interface, an application program, and the like. The modem processor, for example, a baseband processor, mainly processes a wireless communication signal. It is to be understood that the modem processor may not be integrated into the processor 1110.

The radio frequency unit 1101 is configured to receive first configuration information associated with a validity verification parameter, where the first configuration information is carried in a first message, and the first message includes at least one of: a handover command; an SIB1; a radio resource control RRC release message; a terminal information request message; an RRC connection setup message; or an RRC resume message.

In a possible implementation, the radio frequency unit 1101 is configured to, after receiving the first configuration information, in the case that a valid measurement result is present in at least one measurement result, send the valid measurement result to a network-side device.

In a possible implementation, the first configuration information is carried in the handover command. The first configuration information includes configuration information of a validity verification parameter corresponding to a target cell, or a first system message. The first system message carries the configuration information of the validity verification parameter corresponding to the target cell.

The handover command is used to instruct the terminal to switch to the target cell.

In a possible implementation, the first configuration information is carried in the SIB1, and the first configuration information includes configuration information of the validity verification parameter.

In a possible implementation, the first configuration information is carried in the SIB1, and the first configuration information further includes first indication information. The first indication information is used to instruct the terminal to perform validity verification.

In a possible implementation, the first configuration information is carried in the RRC release message, and the first configuration information includes configuration information of at least one validity verification parameter.

Each validity verification parameter corresponds to one cell in a validity cell list under a validity area list.

In a possible implementation, the first configuration information is carried in the RRC connection setup message, and the first configuration information includes configuration information of the validity verification parameter, or a second system message. The second system message carries the configuration information of the validity verification parameter.

In a possible implementation, the first configuration information is carried in the RRC resume message, and the first configuration information includes configuration information of the validity verification parameter, or a third system message. The third system message carries the configuration information of the validity verification parameter.

In a possible implementation, the radio frequency unit 1101 is further configured to, after receiving the first configuration information, in the case that a valid measurement result is present in at least one measurement result, send, by the terminal, second indication information to the network-side device, where the second indication information indicates the presence of a valid measurement result.

In a possible implementation, the second indication information is carried in a second message. The second message includes at least one of:
an RRC connection setup complete message; or
an RRC resume complete message.

In a possible implementation, the radio frequency unit 1101 is further configured to, before receiving the first configuration information, send third indication information to the network-side device, where the third indication information is used to instruct the network-side device to configure a validity verification parameter for the terminal.

In a possible implementation, the third indication information is carried in a third message. The third message includes at least one of:
an RRC connection setup complete message; or
an RRC resume complete message.

According to the terminal provided in this embodiment of this application, the validity verification parameter may be carried via the first configuration information in the handover command, the SIB1, the RRC release message, the terminal information request message, the RRC connection setup message, or the RRC resume message. Therefore, since the reception time of the first message is before the terminal sends a measurement result to the network-side device, timely receipt of the validity verification parameter can be ensured compared with receiving the validity verification parameter via the SIB11, thereby achieving the objective of ensuring the accuracy of validity verification of the measurement result.

It is to be understood that for implementation processes of the implementations mentioned in this embodiment, refer to related descriptions of the foregoing validity verification method embodiment, and the same or corresponding technical effects are achieved. To avoid repetition, details are not described herein again.

An embodiment of this application further provides a network-side device, including a processor and a communication interface. The communication interface is coupled to the processor. The processor is configured to execute a program or instructions to implement the steps in the method embodiment shown in FIG. 6. The network-side device embodiment corresponds to the foregoing network-side device method embodiment. The implementation processes and implementations of the foregoing method embodiment are applicable to the network-side device embodiment and can achieve the same technical effects.

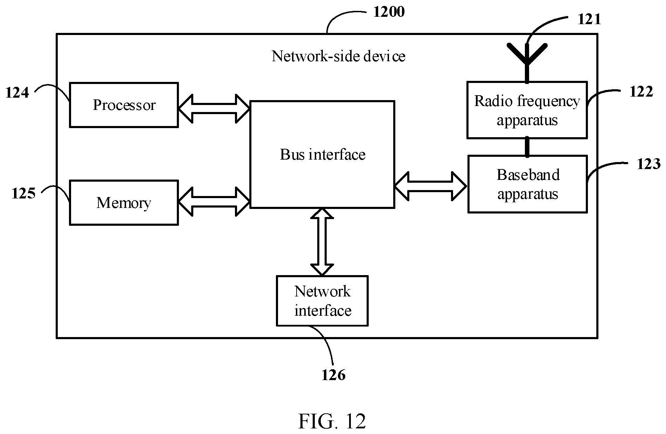

Specifically, an embodiment of this application further provides a network-side device. As shown in FIG. 12, the network-side device 1200 includes an antenna 121, a radio frequency apparatus 122, a baseband apparatus 123, a processor 124, and a memory 125. The antenna 121 is connected to the radio frequency apparatus 122. In an uplink direction, the radio frequency apparatus 122 receives information through the antenna 121, and transmits the received information to the baseband apparatus 123 for processing. In a downlink direction, the baseband apparatus 123 processes information to be transmitted, and transmits the processed information to the radio frequency apparatus 122. After processing the received information, the radio frequency apparatus 122 transmits the processed information through the antenna 121.

The method performed by a network-side device in the foregoing embodiment may be implemented in the baseband apparatus 123. The baseband apparatus 123 includes a baseband processor.

For example, the baseband apparatus 123 may include at least one baseband board. A plurality of chips are disposed on the baseband board. As shown in FIG. 12, one of the chips is, for example, the baseband processor, and is connected to the memory 125 via a bus interface, to invoke a program in the memory 125 to perform the operations of the network device shown in the foregoing method embodiment.

The network-side device may further include a network interface 126, and the interface is, for example, a common public radio interface (Common Public Radio Interface, CPRI).

Specifically, the network-side device 1200 in this embodiment of this disclosure further includes instructions or a program stored on the memory 125 and executable on the processor 124. The processor 124 invokes the instructions or the program in the memory 125 to perform the method performed by the modules shown in FIG. 9, and the same technical effects are achieved. To avoid repetition, details are not described herein again.

An embodiment of this application further provides a readable storage medium. The readable storage medium has a program or instructions stored thereon. The program or the instructions, when executed by a processor, implement the processes of the foregoing validity verification method embodiment, and the same technical effects can be achieved. To avoid repetition, details are not described herein again.

The processor is a processor in the terminal described in the foregoing embodiments. The readable storage medium includes a computer-readable storage medium such as a computer read-only memory ROM, a random access memory RAM, a magnetic disk, or an optical disc. In some examples, the readable storage medium may be a non-transitory readable storage medium.

An embodiment of this application further provides a chip. The chip includes a processor and a communication interface. The communication interface is coupled to the processor. The processor is configured to execute a program or instructions to implement the processes of the foregoing validity verification method embodiment, and the same technical effects can be achieved. To avoid repetition, details are not described herein again.

It should be understood that the chip mentioned in this embodiment of this application may also be referred to as a system-level chip, a system chip, a chip system, a system on chip, or the like.

An embodiment of this application further provides a computer program/program product. The computer program/program product is stored in a storage medium. The computer program/program product is executed by at least one processor to implement the processes in the foregoing validity verification method embodiment, and the same technical effects can be achieved. To avoid repetition, details are not described herein again.

An embodiment of this application further provides a wireless communication system, including a terminal and a network-side device. The terminal may be configured to perform the steps of the validity verification method as described above, and the network-side device may be configured to perform the steps of the validity verification method as described above.

It should be noted that in the specification, the term "include", "comprise", or any of their variants is intended to cover a non-exclusive inclusion, so that a process, a method, an article, or an apparatus that includes a list of elements not only includes those elements but also includes other elements that are not expressly listed, or further includes elements inherent to such process, method, article, or apparatus. Without more limitations, an element preceded by "includes a ..." does not preclude the existence of additional identical elements in the process, method, article, or apparatus that includes the element. In addition, it should be noted that the scope of the method and apparatus in the implementations of this application is not limited to performing functions in an order shown or discussed, and can further include performing functions in a basically simultaneous manner or in a reverse order based on the functions involved. For example, the described method can be performed in an order different from the order described, and various steps may be added, omitted, or combined. In addition, features described with reference to some examples may be combined in other examples.

According to the foregoing descriptions of the implementations, a person skilled in the art may clearly understand that the method in the foregoing embodiments may be implemented by a computer software product and a necessary general-purpose hardware platform, or certainly may be implemented by hardware. The computer software product is stored in a storage medium (such as a ROM, a RAM, a magnetic disk, or an optical disc) and includes a plurality of instructions for instructing a terminal or a network-side device to perform the method described in the embodiments of this application.

The foregoing describes the embodiments of this application with reference to the accompanying drawings. However, this application is not limited to the foregoing specific implementations. The foregoing specific implementations are merely illustrative rather than restrictive. Inspired by this application, a person of ordinary skill in the art may develop many forms of implementations without departing from principles of this application and the scope of protection of the claims, and all such implementations fall within the scope of protection of this application.

## Claims

1. A validity verification method, comprising:
receiving, by a terminal, first configuration information associated with a validity verification parameter,
wherein the first configuration information is carried in a first message, and the first message comprises at least one of:
a handover command;
a system information block SIB1;
a radio resource control RRC release message;
a terminal information request message;
an RRC connection setup message; or
an RRC resume message.

2. The method according to claim 1, wherein after receiving, by the terminal, the first configuration information, the method further comprises:
in the case that a valid measurement result is present in at least one measurement result, sending, by the terminal, the valid measurement result to a network-side device.

3. The method according to claim 1 or 2, wherein the first configuration information is carried in the handover command, and the first configuration information comprises configuration information of a validity verification parameter corresponding to a target cell, or a first system message carrying the configuration information of the validity verification parameter corresponding to the target cell,
wherein the handover command is used to instruct the terminal to switch to the target cell.

4. The method according to claim 1 or 2, wherein the first configuration information is carried in the RRC release message, and the first configuration information comprises configuration information of at least one validity verification parameter,
wherein each validity verification parameter corresponds to one cell in a validity cell list under a validity area list.

5. The method according to claim 1 or 2, wherein the first configuration information is carried in the RRC connection setup message, and the first configuration information comprises configuration information of the validity verification parameter, or a second system message carrying the configuration information of the validity verification parameter.

6. The method according to claim 1 or 2, wherein the first configuration information is carried in the RRC resume message, and the first configuration information comprises configuration information of the validity verification parameter, or a third system message carrying the configuration information of the validity verification parameter.

7. The method according to any one of claims 1 to 6, wherein after receiving, by the terminal, the first configuration information, the method further comprises:
in the case that a valid measurement result is present in at least one measurement result, sending, by the terminal, second indication information to the network-side device, wherein the second indication information indicates the presence of a valid measurement result.

8. The method according to claim 7, wherein the second indication information is carried in a second message, and the second message comprises at least one of:
an RRC connection setup complete message; or
an RRC resume complete message.

9. The method according to any one of claims 1 to 6, wherein before receiving, by the terminal, the first configuration information, the method further comprises:
sending, by the terminal, third indication information to the network-side device, wherein the third indication information is used to instruct the network-side device to configure a validity verification parameter for the terminal.

10. The method according to claim 9, wherein the third indication information is carried in a third message, and the third message comprises at least one of:
an RRC connection setup complete message; or
an RRC resume complete message.

11. A validity verification method, comprising:
sending, by a network-side device, first configuration information associated with a validity verification parameter to a terminal,
wherein the first configuration information is carried in a first message, and the first message comprises at least one of:
a handover command;
a system information block SIB1;
a radio resource control RRC release message;
a terminal information request message;
an RRC connection setup message; or
an RRC resume message.

12. The method according to claim 11, wherein after sending, by the network-side device, the first configuration information to the terminal, the method further comprises:
receiving, by the network-side device, a valid measurement result from the terminal.

13. The method according to claim 11 or 12, wherein the first configuration information is carried in the handover command, and the first configuration information comprises configuration information of a validity verification parameter corresponding to a target cell, or a first system message carrying the configuration information of the validity verification parameter corresponding to the target cell,
wherein the handover command is used to instruct the terminal to switch to the target cell.

14. The method according to claim 11 or 12, wherein the first configuration information is carried in the RRC release message, and the first configuration information comprises configuration information of at least one validity verification parameter,
wherein each validity verification parameter corresponds to one cell in a validity cell list under a validity area list.

15. The method according to claim 11 or 12, wherein the first configuration information is carried in the RRC connection setup message, and the first configuration information comprises configuration information of the validity verification parameter, or a second system message carrying the configuration information of the validity verification parameter.

16. The method according to claim 11 or 12, wherein the first configuration information is carried in the RRC resume message, and the first configuration information comprises configuration information of the validity verification parameter, or a third system message carrying the configuration information of the validity verification parameter.

17. The method according to any one of claims 11 to 16, wherein after sending, by the network-side device, the first configuration information to the terminal, the method further comprises:
receiving, by the network-side device, second indication information from the terminal, wherein the second indication information indicates the presence of a valid measurement result.

18. The method according to claim 17, wherein the second indication information is carried in a second message, and the second message comprises at least one of:
an RRC connection setup complete message; or
an RRC resume complete message.

19. The method according to any one of claims 11 to 16, wherein before sending, by the network-side device, the first configuration information to the terminal, the method further comprises:
receiving, by the network-side device, third indication information from the terminal, wherein the third indication information is used to instruct the network-side device to configure a validity verification parameter for the terminal.

20. The method according to claim 19, wherein the third indication information is carried in a third message, and the third message comprises at least one of:
an RRC connection setup complete message; or
an RRC resume complete message.

21. A validity verification apparatus, comprising a receiving module, wherein
the receiving module is configured to receive first configuration information associated with a validity verification parameter,
wherein the first configuration information is carried in a first message, and the first message comprises at least one of:
a handover command;
a system information block SIB1;
a radio resource control RRC release message;
a terminal information request message;
an RRC connection setup message; or
an RRC resume message.

22. The apparatus according to claim 21, wherein the first configuration information is carried in the handover command, and the first configuration information comprises configuration information of a validity verification parameter corresponding to a target cell, or a first system message carrying the configuration information of the validity verification parameter corresponding to the target cell,
wherein the handover command is used to instruct the terminal to switch to the target cell.

23. The apparatus according to claim 21, wherein the first configuration information is carried in the RRC release message, and the first configuration information comprises configuration information of at least one validity verification parameter,
wherein each validity verification parameter corresponds to one cell in a validity cell list under a validity area list.

24. The apparatus according to claim 21, wherein the first configuration information is carried in the RRC connection setup message, and the first configuration information comprises configuration information of the validity verification parameter, or a second system message carrying the configuration information of the validity verification parameter.

25. The apparatus according to claim 21, wherein the first configuration information is carried in the RRC resume message, and the first configuration information comprises configuration information of the validity verification parameter, or a third system message carrying the configuration information of the validity verification parameter.

26. A validity verification apparatus, comprising a sending module, wherein
the sending module is configured to send first configuration information associated with a validity verification parameter to a terminal,
wherein the first configuration information is carried in a first message, and the first message comprises at least one of:
a handover command;
a system information block SIB1;
a radio resource control RRC release message;
a terminal information request message;
an RRC connection setup message; or
an RRC resume message.

27. The apparatus according to claim 26, wherein the first configuration information is carried in the handover command, and the first configuration information comprises configuration information of a validity verification parameter corresponding to a target cell, or a first system message carrying the configuration information of the validity verification parameter corresponding to the target cell,
wherein the handover command is used to instruct the terminal to switch to the target cell.

28. The apparatus according to claim 26, wherein the first configuration information is carried in the RRC release message, and the first configuration information comprises configuration information of at least one validity verification parameter,
wherein each validity verification parameter corresponds to one cell in a validity cell list under a validity area list.

29. The apparatus according to claim 26, wherein the first configuration information is carried in the RRC connection setup message, and the first configuration information comprises configuration information of the validity verification parameter, or a second system message carrying the configuration information of the validity verification parameter.

30. The apparatus according to claim 26, wherein the first configuration information is carried in the RRC resume message, and the first configuration information comprises configuration information of the validity verification parameter, or a third system message carrying the configuration information of the validity verification parameter.

31. A measurement reporting processing method, comprising:
reporting, by a terminal, target information used to assist a network-side device in configuring dual connectivity DC or carrier aggregation CA for the terminal, wherein the target information comprises at least one of a measurement result of enhanced measurement, a measurement result of early measurement, or fourth information.

32. The method according to claim 34, wherein the fourth information comprises at least one of:
first sub-information, wherein the first sub-information indicates that the reported target information is the measurement result of enhanced measurement; or
second sub-information, wherein the second sub-information indicates that the reported target information is the measurement result of early measurement.

33. A measurement reporting processing method, comprising:
receiving, by a network-side device, target information used to assist the network-side device in configuring dual connectivity DC or carrier aggregation CA for a terminal, wherein the target information comprises at least one of a measurement result of enhanced measurement, a measurement result of early measurement, or fourth information.

34. The method according to claim 34, wherein the fourth information comprises at least one of:
first sub-information, wherein the first sub-information indicates that the reported target information is the measurement result of enhanced measurement; or
second sub-information, wherein the second sub-information indicates that the reported target information is the measurement result of early measurement.

35. A measurement reporting apparatus, comprising a receiving module, wherein
the receiving module is configured to receive target information used to assist a network-side device in configuring dual connectivity DC or carrier aggregation CA for a terminal, wherein the target information comprises at least one of a measurement result of enhanced measurement, a measurement result of early measurement, or fourth information.

36. The apparatus according to claim 35, wherein the fourth information comprises at least one of:
first sub-information, wherein the first sub-information indicates that the reported target information is the measurement result of enhanced measurement; or
second sub-information, wherein the second sub-information indicates that the reported target information is the measurement result of early measurement.

37. A measurement reporting apparatus, comprising a sending module, wherein
the sending module is configured to send target information used to assist a network-side device in configuring dual connectivity DC or carrier aggregation CA for the terminal, wherein the target information comprises at least one of a measurement result of enhanced measurement, a measurement result of early measurement, or fourth information.

38. The apparatus according to claim 37, wherein the fourth information comprises at least one of:
first sub-information, wherein the first sub-information indicates that the reported target information is the measurement result of enhanced measurement; or
second sub-information, wherein the second sub-information indicates that the reported target information is the measurement result of early measurement.

39. A terminal, comprising a processor and a memory, wherein the memory stores a program or instructions executable on the processor, and the program or the instructions, when executed by the processor, implement the steps of the validity verification method according to any one of claims 1 to 10 or the steps of the measurement reporting method according to either of claim 31 or 32.

40. A network-side device, comprising a processor and a memory, wherein the memory stores a program or instructions executable on the processor, and the program or the instructions, when executed by the processor, implement the steps of the validity verification method according to any one of claims 11 to 20 or the steps of the measurement reporting method according to either of claim 33 or 34.

41. A readable storage medium having a program or instructions stored thereon, wherein the program or the instructions, when executed by a processor, implement the steps of the validity verification method according to any one of claims 1 to 10 or the steps of the measurement reporting method according to either of claim 31 or 32, or implement the steps of the validity verification method according to any one of claims 11 to 20 or the steps of the measurement reporting method according to either of claim 33 or 34.
